# EUROPEAN PATENT APPLICATION

(11) **EP 1 659 493 A1**
(43) Date of publication of application: **24.05.2006**
(21) Application number: 05257084.3
(22) Date of filing: 16.11.2005
(51) Int. Cl.: G06F 9/52

(54) **Replacing idle process when doing fast messaging**

(30) Priority: 19.11.2004 US 629296 P; 08.11.2005 US 268659
(71) Applicant: Red Hat, Inc., Raleigh NC 27606 (US)
(72) Inventor: Cox, Alan, Swansea Wales. SA1 5QQ (GB)
(74) Representative: Hutchinson, Glenn Stanley

(57) **Abstract**

Improvements are made to the kernel of computer system. In particular, the kernel is allowed to utilize information that it has available to it to determine which, if any, processes should be in the spinning loop and which processes should be in the wait state. The result of such a determination is then efficiently communicated to the processes.

## Description

### Related Application

This application claims the priority of U.S. Provisional Application 60/629,296 filed on November 19, 2004.

### Field of the Invention

The present invention relates to improvements in computer operating systems. In particular, the present invention is directed to improving the management of computing resources by a kernel in sending and receiving messages.

### Background of the Invention

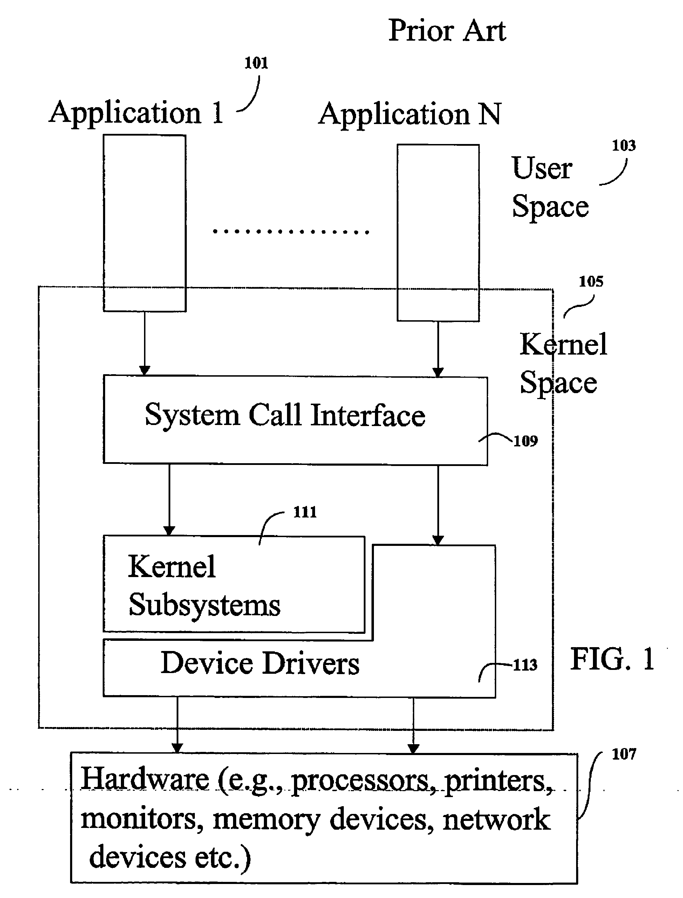

As illustrated in FIG. 1, the software that runs a computer system typically includes two groups of programs. The first group comprises user applications **101** such as Microsoft® Word, Internet browsers, and other software programs that are unprivileged applications which may directly interact with users. These applications are executed in the "user-space" **103** and are referred to as processes, or tasks, when they are being executed by the computer system. Here, being executed means the program is loaded into the memory of the computer system and processors (e.g., a Central Processing Unit (CPU)) within the computer system execute instructions of the program. The second group comprises the core internal programs, referred to as the kernel, which are responsible for resource allocation, low-level hardware interfaces, security, etc. These programs run in the "kernel space" **105.**

A number of processes can be waiting to run in the user space **103.** Each process makes requests to the kernel via a system call interface **109** to access resources of the computer system, e.g., processors, printers, monitors, storage devices, network devices, etc. The system call interface receives requests from the processes and forwards them to kernel subsystems **111** and/or device drivers **113,** which execute the requests.

To manage the requests from various processes efficiently, a typical operating system (e.g., UNIX, Linux, etc.) includes a scheduling policy. Such a policy is designed to fulfill several objectives such as fast process response time, avoidance of idle time, reconciliation of the needs of low- and high-priority processes, and so on. One part of implementing such a policy is to designate "states" to each process. A non-exhaustive list of the states includes: "running," "ready," and "wait" states. The "running" state indicates a process that is being executed. The "ready" state is a process wanting to be executed. The "wait" state is a process being suspended from executing and waiting for some external event or other process to be completed. The processes in one of these states can be transitioned into another state based on instruction signals received from the kernel. Example signals include: a "wake/wake-up" signal that transitions a process in the "wait" state to the "ready" state; and a "pre-empt" signal that cause a process in the "running" state to transition to the "ready" state.

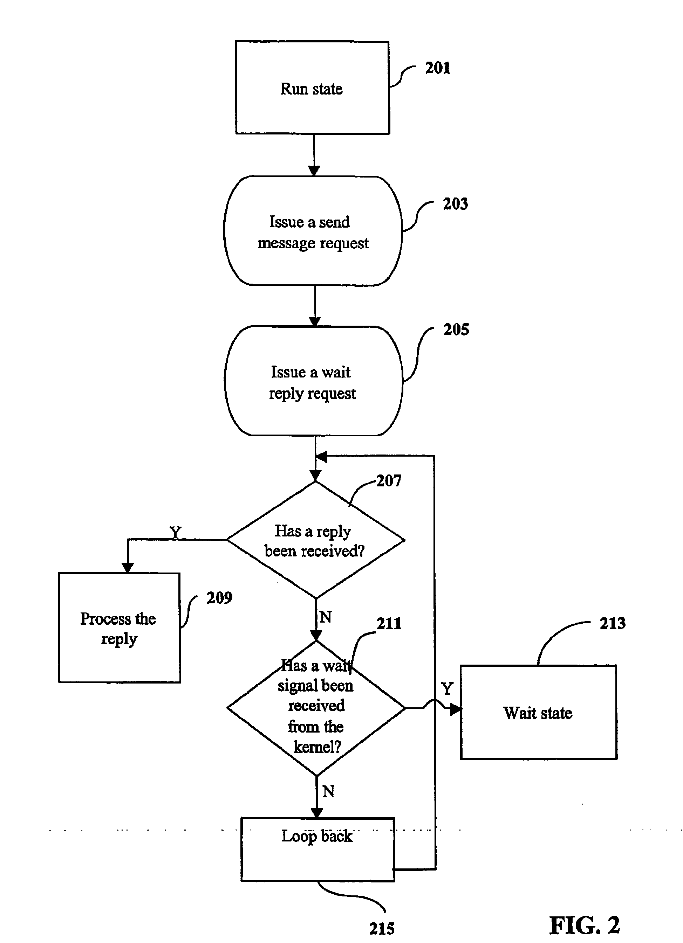

FIG. 2 illustrates an example of a policy for exchanging messages. In particular, a process in the running state **201** may issue a request **203** to send a message to an external device (e.g., a query to a database to store or retrieve information). After sending the request, the process can also issue a request to wait for a reply **205.** The process then goes into a "spinning loop," which is described below, until a reply is received:
1. Determine whether or not a reply has been received **207.** If a reply has been received, process the reply **209.** If not, go to the next step.
2. Determine if a "wait" signal has been received from the kernel **211.** If a wait signal has been received, the process goes into the wait state **213.** If no wait signal has been received, the process loops back **215** to the above step of asking the kernel if a reply has been received.

The process would be in the spinning loop for a predetermined period of time (e.g., a tenth of a second) after which the process goes into the "wait" state. When numerous processes are waiting for replies, some of them would be in the "wait" state while others would be in the spinning loop. This causes some processes to be in the spinning loop even though they will be receiving replies after a long period of time. It also causes some processes to be in the "wait" state even though they might receive replies soon. This causes the kernel to expend most of the cost of receiving a reply to determine which process to wake-up and switch it to the "running" state. Hence, although the above-described spinning loop is currently used for fast interconnects such as the Type VI Interconnects or Infiniband by Intel®, it can cause the kernel to manage the resources inefficiently.

### Summary of the Invention

The present invention allows the kernel to use information that it has available to it to determine which, if any, processes should be in the spinning loop and which processes should be in the "wait" state based on an estimate of when replies are likely to be received. The result of such a determination is then communicated to the processes.

As for the information available to the kernel, it knows, for example, which, if any, networks are down or congested thereby causing delays, which processes have priorities over other processes, and the like. Using this information, the kernel can estimate the time of arrival for any particular reply and instruct processes to be in the "wait" state or in the spinning loop. The instruction is communicated to the processes by one or more shared memory locations that are owned by the kernel and executed by the processes. In one embodiment, the kernel may modify the shared processes with the estimate. In another embodiment, the kernel may write the instructions to one or more shared memory locations to be read by the shared processes. In another embodiment, the instructions written into the shared memory locations can be read by the processes themselves. The processes can also write information into one or more shared memory locations to be read by the kernel. This information can then be used by the kernel in estimating the time of arrival of the replies.

### Brief Description of the Drawings

FIG. 1 is a schematic of a conventional software architecture of a computer system;

FIG. 2 is a flow chart of a conventional way to exchange a message;

FIG. 3 is a schematic of an example embodiment of the present invention for exchanging information between the process(es) and the kernel in sending and receiving messages using a shared memory location;

FIG. 4 is a schematic of an example embodiment of the present invention for exchanging information between the process(es) and the kernel in sending and receiving messages usingshared memories; and

FIG. 5 is a schematic of an example embodiment of the present invention for exchanging information between the process(es) and the kernel in sending and receiving messages using shared memories.

### Detailed Description of Preferred Embodiments

In sending and receiving messages, the kernel is configured to communicate with various processes to efficiently manage computing resources. The kernel largely determines the content of the communication. In particular, when a process is waiting for a reply, the kernel determines the state in which the process should wait for the reply. For instance, the process may wait in the spinning loop described above in connection with FIG. 2 if the process is likely to receive its reply soon. If the process is not likely to receive the reply soon, the kernel may put the process into the "wait" state to be "woken" when its reply is received or about to arrive.

In a multi-process system, the kernel can determine which, if any, of the processes are running. If there is only one process running and the process is waiting for a reply, the kernel can allow the process to stay in the spinning loop until a reply is received. The process can stay in the spinning loop indefinitely until another process is required to be executed. Alternatively, if the reply is unlikely to arrive before a predetermined period of time (e.g., one minute or longer), the kernel can instruct the process to go into the "wait" state. This may require the kernel to predict when the reply message is likely to arrive. The kernel has access to a variety of information to estimate the predicted arrival time.

For instance, the kernel may have information relating to any downed or congested networks that may cause delays in sending/receiving messages. The kernel may also have information relating to how many processes are waiting for messages and how many messages have already been received but are located in a queue to be processed. Moreover, the kernel knows which of the processes have higher priority over other processes. Based on the available information, the kernel can estimate the predicted arrival time in terms of, for example, the number of clock cycles to be elapsed before the reply arrives, e.g., by statistical likelihood. The processes themselves (or an external device, e.g., network controller)may also provide the relevant information. For instance, if a process is making a query to a database, the process may have information as to how long the database typically takes to complete such a query. This information can be passed to the kernel to aid the kernel in determining the predicted arrival time of a reply. Actual estimation by the kernel can occur when the process enters the spinning loop, and/or when one or more processors (e.g., the Central Processing Unit) are free from other requests made by the processes.

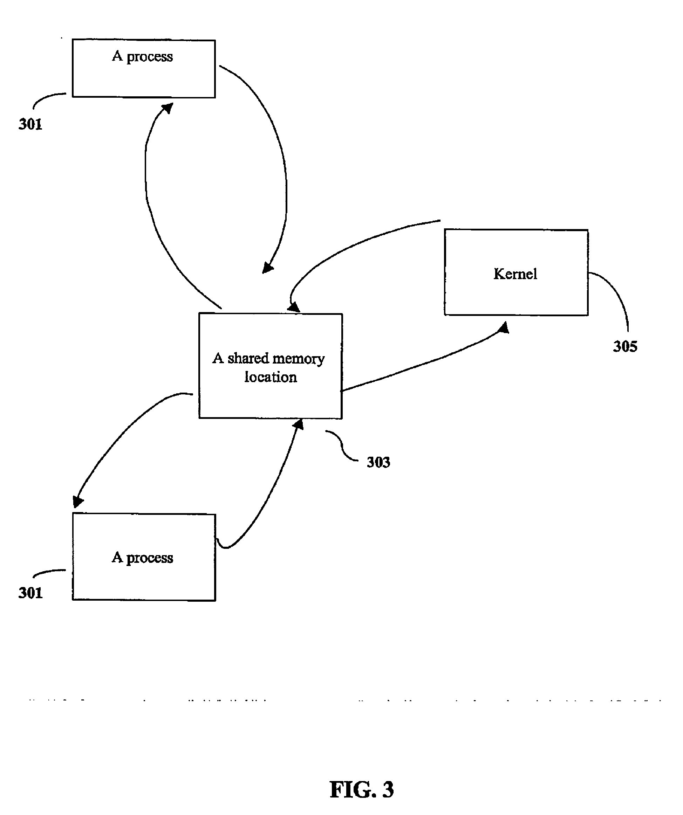

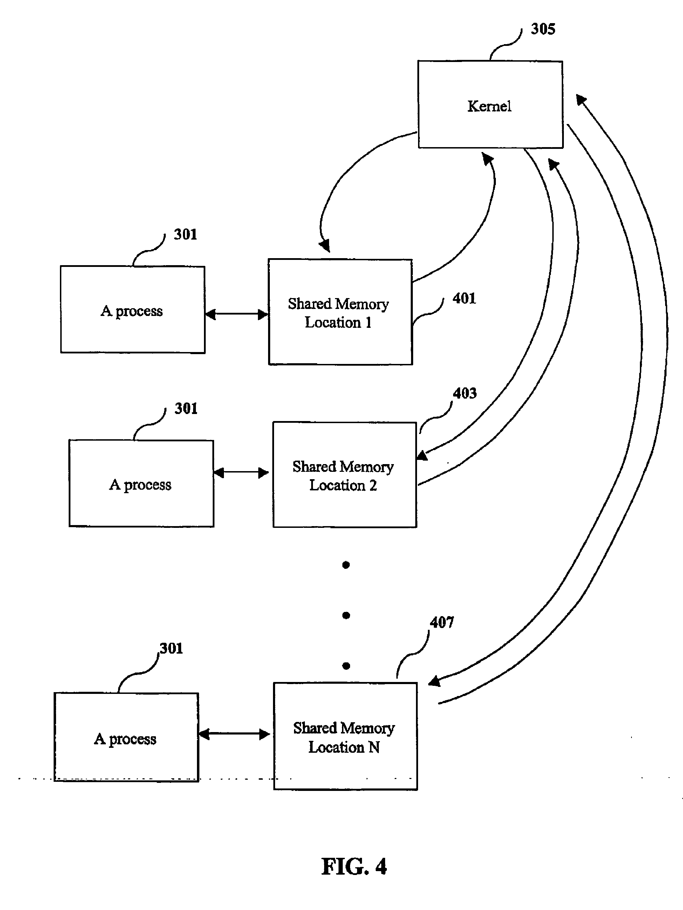

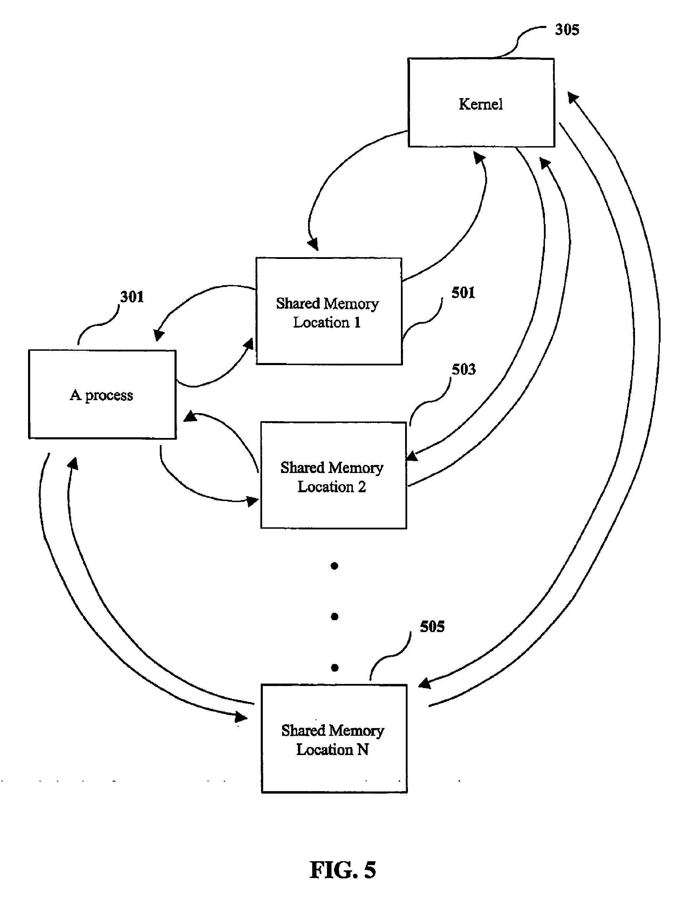

These and other features are described below in connection with FIGs. 3-5. In particular, in an example embodiment shown in FIG. 3, a shared memory location **303** is provided to facilitate the communication between the kernel **305** and the processes **301.** The kernel **305** may modify the memory location **303.** In another example embodiment shown in FIG. 4, the kernel **305** may write information into a predetermined memory location(s) **401, 403, 407** for the process(es) **301** to read. The information stored in predetermined memory locations **501, 503, 505** can also be read directly by the processes themselves as shown in FIG. 5.

Now turning to FIG. 3, the shared memory location **303** facilitates the communication between the kernel **305** and the processes **301.** In particular, a shared memory location can be created each time a process waits for a reply. Alternately, one shared memory location can be created for multiple processes, or one shared memory location can be created for all processes. In the embodiment illustrated in FIG. 3, the kernel **305** can own the shared memory location **303.** This allows the kernel **305** to modify the shared memory location **303.** Hence, when the kernel estimates the arrival time of the reply, it can modify the shared memory location with that estimate. The process, instead of waiting for the kernel to respond, can access the information the kernel **305** has written into the shared location **303.** Based on the estimate, the process **301** may stay in the spinning loop or go into the "wait" state. Once the process is in the "wait" state, the kernel **305** can wake it up. The process can also put itself into the "ready" state based on the estimated time that it received from the shared process and the elapsed time that it internally calculates. As noted above, one shared process can communicate with many processes. In such an embodiment, the shared process could include designated fields (e.g., registers) for each process so that the kernel can write information specific to a particular process. In other embodiments, one shared process can be provided for each process. In this embodiment, each shared process may need to include only one information field.

The communication can be one way from the kernel **305** to the shared memory location **303,** and then to the processes **301.** In some embodiments, the communication can be two ways, which allows the processes **301** to send information to the kernel **305** via the shared memory location **303.** For instance, if a process can estimate, based on historical information, the typical length of time to receive a particular type of reply, the process can store that information to its shared memory location. The kernel **305** can then read that information in its calculation of estimating the time of arrival for the reply.

In another embodiment illustrated in FIG. 4, the information from the kernel **305** can be written into shared memory locations **401, 403, 407.** For instance, the kernel **305** may store the estimated time into shared memory location 1 **401**, which is to be read by a process **301.** In this configuration, the process reads the data stored in its shared memory location. Based on this information, the process may stay in the spinning loop or go into the "wait" state. As with the example embodiment shown in FIG. 3, one shared memory location can be provided for one process or multiple processes. However, each memory location can be configured to store information from a specific process. For instance, shared memory location 1 **401** may only have information relating to the process associated with it. In this configuration, the processes, via the shared processes, can also be allowed to write information to the shared memory locations. Such a configuration allows the processes to share information with the kernel. As described above, the processes may have information relating to how long a reply may take (e.g., in response to a query made to a database). Such information can be written into one of the shared memory locations. The information can then be read by the kernel **305** in estimating the predicted time of arrival for replies. The shared memory locations can be any storage locations such as designated registers, global variables, or the like.

In yet another example embodiment as illustrated in FIG. 5, the kernel **305** can write information into shared memory locations **501, 503, 505,** and the processes **301** can read the information directly from the shared memory locations without the shared processes.

The estimates for each process can occur whenever there is a processor free to calculate the predicted time of arrival for the replies. The estimates can also take place for the processes that are currently in the running state or about to receive a wake up signal. The calculation of the estimates can also be delayed depending upon the availability of computing resources (e.g., the processors are tied up executing the processes in the running state).

It will be appreciated that embodiments can be realised in the form of hardware, software or a combination thereof. Furthermore, any such software can be stored using computer storage like an optically or magnetically-readable medium such as, for example, an optical disc or magnetic disc, or using a memory such as, for example, a chip, ROM, flash memory or the like.

While there have been shown and described examples of the present invention, it will be readily apparent to those skilled in the art that various changes and modifications may be made without departing from the scope of the invention as defined by the following claims. The present invention is applicable to any operating system (e.g., Linux™, Unix, Microsoft Windows, MacOS, etc.). Accordingly, the invention is limited only by the following claims and equivalents thereto.

## Claims

1. A method for reducing computational overhead when sending and receiving messages in a computing environment, comprising:
issuing, by a first process, a request to send a message;
issuing, by the first process, a request to receive a reply;
determining, by a kernel, whether the first process is to spin waiting for a reply or be suspended from execution; and
communicating, by the kernel, a result of the determination to a second process that is owned by the kernel and called by the first process, wherein the first process spins waiting or suspends execution based on the result of the determination.

2. The method of claim 1, further comprising, in communicating the result of the determination:
storing, by the kernel, to a first memory location the result of the determination; and
reading, by the second process, the result from the first memory location.

3. The method of claim 2, further comprising:
configuring the first memory location as writable only by the kernel.

4. The method of any preceding claim, further comprising:
modifying, by the kernel, the second process according to the result of the determination.

5. The method of any preceding claim, wherein the kernel makes the determination based on priority information relating to at least the first process.

6. The method of any preceding claim, wherein the kernel makes the determination based on statistical likelihood of the first process receiving a reply within a predetermined number of clock cycles.

7. The method of any preceding claim, wherein the kernel makes the determination based on information received from at least one external device.

8. The method of claim 7, wherein the at least one external device is a network communication device.

9. The method of any preceding claim, further comprising:
estimating, by the first process, a length of time for receiving a reply;
storing, by the first process, the estimation to a second memory location;
reading, by the kernel, the estimation from the second memory location; and
using, by the kernel, the estimation in making the determination.

10. A computer system comprising:
a user-space that includes a first process configured to issue a request to send a message and a request to receive a reply;
a kernel configured to determine whether the first process is to spin waiting for a reply or be suspended from execution and to communicate a result of the determination to a first memory location, wherein the first memory location is owned by the kernel and called by the first process, and wherein the first process uses the determination to determine whether to spin waiting or suspend execution.

11. The system of claim 10, wherein the kernel is further configured to store the result of the determination into the first memory location and the second process is configured to read the result from the first memory location.

12. The system of either of claims 11 and 12, wherein the first memory location is writable only by the kernel.

13. The system of any of claims 10 to 12, wherein the kernel is further configured to modify the first memory location according to the result of the determination.

14. The system of any of claims 10 to 13, wherein the kernel is further configured to make the determination based on priority information relating to at least the first process.

15. The system of any of claims 10 to 14, wherein the kernel is further configured to make the determination based on statistical likelihood of the first process receiving a reply within a predetermined number of clock cycles.

16. The system of any of claims 10 to 15, wherein the kernel is further configured to make the determination based on information received from at least one external device.

17. The system of claim 16, wherein the at least one external device is a network communication device.

18. The system of any of claims 10 to 17, wherein the first process is further configured to estimate a length of time for receiving a reply and to store the estimation to a second memory location, and the kernel is further configured to read the estimation from the second memory location and to use the estimation in making the determination.

19. A computer program for use in reducing computational overhead when sending and receiving messages in a computing environment, the computer program comprising instructions for causing a computer to:
determine, by a kernel, whether a process that has issued a request to send a message and a request to receive a reply is to spin waiting for a reply or be suspended from execution; and
communicate, by the kernel, a result of the determination to a memory location that is owned by the kernel and called by the process.

20. The program of claim 19, further comprising instructions for causing the computer to:
read, by the kernel, an estimation from the memory location of a length of time for receiving a reply; and
use, by the kernel, the estimation in making the determination.

21. A computer program product storing a program as claimed in either of claims 19 and 20.

22. A computer program comprising instructions for implementing a method or system as claimed in any of claims 1 to 18.

23. Computer-readable storage storing a computer program as claimed in claim 22.
